# EUROPÄISCHE PATENTANMELDUNG

(11) **EP 2 196 907 A2**
(43) Veröffentlichungstag der Anmeldung: **16.06.2010**
(21) Anmeldenummer: 09169683.1
(22) Anmeldetag: 08.09.2009
(51) Int. Cl.: G06F 11/14

(54) **Vorrichtung zum Auswählen von Daten für eine Speicherung**

(30) Priorität: 16.09.2008 DE 102008047532
(71) Anmelder: Vodafone Holding GmbH, 40213 Düsseldorf (DE)
(72) Erfinder: Bijjou, Badr, 40667, Meerbusch (DE); Wessel, Frank, 41747, Viersen (DE)
(74) Vertreter: Vogel, Andreas

(57) **Zusammenfassung**

Die Erfindung betrifft eine Vorrichtung (10) zum Auswählen von Daten (100) für eine Speicherung,
wobei die Daten (100)
- in wenigstens einem Datenelement (120,120') angeordnet sind und
- das wenigstens eine Datenelement (120,120') in wenigstens einer Dateneinheit (110,110') angeordnet ist,
mit
- zumindest einem Zeitmittel (20)
o zur Bestimmung einer Sendedauer aus einer Datenrate, mit welcher die Daten (100) an eine Speichereinheit (50) sendbar sind, und einer Gesamtmenge der Daten (100) der wenigstens einen Dateneinheit (110,110'), sowie
o zur Bestimmung einer Übermittlungsdauer aus der Datenrate und einer Datenmenge der Daten (100) wenigstens einer ausgewählten Dateneinheit (110,110'),

- zumindest einem Auswahlmittel (30),
o das bei einer Sendedauer größer als einer Maximaldauer, wenigstens eine ausgewählte Dateneinheit (110,110') anhand eines ersten Merkmales (111,111') auswählt, sowie
o das bei einer Übermittlungsdauer größer als der Maximaldauer, aus der wenigstens einen ausgewählten Dateneinheit (110,110') anhand eines zweiten Merkmales (121,121') wenigstens ein Datenelement (120,120') auswählt, und

- zumindest einem Übergabemittel (40), das
o bei einer Sendedauer kleiner als der Maximaldauer, die wenigstens eine Dateneinheit (110,110') an die Speichereinheit (50) sendet,
o bei einer Sendedauer größer als der Maximaldauer und einer Übermittlungsdauer kleiner als der Maximaldauer, die wenigstens eine ausgewählte Dateneinheit (110,110') an die Speichereinheit (50) sendet, oder
o das wenigstens eine ausgewählte Datenelement (120,120') an die Speichereinheit (50) sendet.

## Beschreibung

Die Erfindung betrifft eine Vorrichtung zum Auswählen von Daten für eine Speicherung gemäß dem Anspruch 1. Weiterhin betrifft die Erfindung ein Verfahren zur Auswahl von Daten für eine Speicherung gemäß dem Anspruch 7.

Auf bekannten Datenverarbeitungseinheiten werden häufig große Mengen von Daten bearbeitet. Damit ein Defekt oder ein Fehler innerhalb der Datenverarbeitungseinheit nicht zu einem Verlust sämtlicher Daten führt, können die Daten auf einer externen Speichereinheit gespeichert werden. Als begrenzender Faktor für die Sicherung hat sich die Zeit herausgestellt, welche benötigt wird, um die Daten von der Datenverarbeitungseinheit auf die Speichereinheit zu übertragen. Bei einem bekannten Verfahren werden nur die aktuell geänderten Daten an die Speichereinheit übertragen. Die anderen, nicht geänderten Daten, werden nicht gesichert. Als nachteilig hat es sich herausgestellt, dass dieses Verfahren zwar eine gewisse Reduzierung der zu sichernden Daten erreicht, jedoch die erzielte Datenreduktion im Hinblick auf die zur Verfügung stehenden Übertragungsmittel nicht ausreichend ist.

Es ist daher die Aufgabe der Erfindung, eine Vorrichtung zum Auswählen von Daten für eine Speicherung zu schaffen, welche die oben genannten Nachteile überwindet, insbesondere für eine Reduktion der Datenmenge sorgt, die im Rahmen einer Speicherung übertragen werden müssen.

Zur Lösung dieser Aufgabe wird eine Vorrichtung zum Ausbilden von Daten für eine Speicherung mit den Merkmalen des Anspruches 1 vorgeschlagen. Vorteilhafte Weiterbildungen der Erfindung sind in den abhängigen Vorrichtungsansprüchen angegeben. Weiterhin wird diese Aufgabe auch durch ein Verfahren zur Auswahl von Daten für eine Speicherung mit den Merkmalen des unabhängigen Anspruches 7 gelöst, wobei vorteilhafte Weiterbildungen des erfindungsgemäßen Verfahrens in den abhängigen Verfahrensansprüchen angegeben sind. Merkmale und Details, die im Zusammenhang mit dem erfindungsgemäßen Verfahren beschrieben sind, gelten dabei selbstverständlich auch im Zusammenhang mit der erfindungsgemäßen Vorrichtung und jeweils umgekehrt. Dabei können die in den Ansprüchen und in der Beschreibung erwähnten Merkmale jeweils einzeln für sich oder in beliebiger Kombination erfindungswesentlich sein.

Im Rahmen der Erfindung wird eine Vorrichtung zur Auswahl von Daten für eine Speicherung offenbart, wobei die Daten
- in wenigstens einem Datenelement angeordnet sind und
- das wenigstens eine Datenelement in wenigstens einer Dateneinheit angeordnet ist,
   mit
- zumindest einem Zeitmittel
   o zur Bestimmung einer Sendedauer aus einer Datenrate, mit welcher die Daten an eine Speichereinheit sendbar sind, und einer Gesamtmenge der Daten der wenigstens einen Dateneinheit sowie
   o zur Bestimmung einer Übermittlungsdauer aus der Datenrate und einer Datenmenge der Daten wenigstens einer ausgewählten Dateneinheit,
- zumindest einem Auswahlmittel,
   o das bei einer Sendedauer größer als einer Maximaldauer, wenigstens eine ausgewählte Dateneinheit anhand eines ersten Merkmales auswählt, sowie
   o das bei einer Übermittlungsdauer größer als der Maximaldauer, aus der wenigstens einen ausgewählten Dateneinheit anhand eines zweiten Merkmales wenigstens ein Datenelement auswählt, und
- zumindest einem Übergabemittel, das
   o bei einer Sendedauer kleiner als der Maximaldauer, die wenigstens eine Dateneinheit an die Speichereinheit sendet,
   o bei einer Sendedauer größer als der Maximaldauer und einer Übermittlungsdauer kleiner als der Maximaldauer, die wenigstens eine ausgewählte Dateneinheit an die Speichereinheit sendet, oder
   o das wenigstens eine ausgewählte Datenelement an die Speichereinheit sendet.

Die erfindungsgemäße Vorrichtung sowie das noch zu beschreibende Verfahren ermöglichen es, Daten in Abhängigkeit von einer zur Verfügung stehenden Datenübertragungsrate selektiv zu sichern. Die Vorrichtung ist unter anderem dazu gedacht, in mobile Endgeräte, wie Mobilfunkgeräte oder Notebooks, integriert zu werden. Die Übermittlung der zu sichernden Daten an eine Speichereinheit ist häufig abhängig von einer Übertragungsrate, mit welcher Daten von den mobilen Endgeräten an die externe Speichereinheit übermittelt werden können. Die beschriebene Vorrichtung weist nun den technischen Vorteil auf, dass sie eine Auswahl der zu sichernden Daten in Abhängigkeit von der momentan zur Verfügung stehenden Übertragungsrate durchführt. Dabei wird eine Auswahl aus allen Daten anhand zweier Merkmale durchgeführt, um das Speichern der ausgewählten Daten innerhalb einer Maximaldauer zu ermöglichen.

Der Kerngedanke der Erfindung besteht darin, die Gesamtheit der möglicherweise zu sichernden Daten in Datenelemente und Dateneinheiten aufzuspalten. Dabei sind die Dateneinheiten mit einem ersten Merkmal versehen und die Datenelemente mit einem zweiten Merkmal. Unter Berücksichtigung der Maximaldauer, welche für die Sicherung vorgesehen ist, bestimmt das Auswahlmittel, ob ein oder mehrere Dateneinheiten und/oder ein oder mehrere Datenelemente übermittelt werden können. Basis für diese Auswahl ist die Bestimmung einer anzunehmenden Sendedauer aus der zur Verfügung stehenden Datenrate - auch als Übertragungsrate oder Datenübertragungsrate bezeichnet - sowie der Gesamtmenge der zu sichernden Daten. Als Datenrate wird dabei im Rahmen der Erfindung jene Rate bezeichnet, mit der eine digitale Datenmenge innerhalb einer Zeiteinheit über einen Übertragungskanal übertragen wird.

Eine weitere vorteilhafte Ausgestaltung der erfindungsgemäßen Vorrichtung zeichnet sich dadurch aus, dass die Vorrichtung ein Vergabemittel aufweist, um der Dateneinheit das erste Merkmal und/oder dem Datenelement das zweite Merkmal zuzuweisen. Bei dem Vergabemittel kann es sich um ein Softwareelement handeln, welches auf dem Notebook und/oder einem anderen mobilen Endgerät ausgeführt wird. Ein entsprechendes Eingabemittel, wie eine Tastatur etc., dient dazu, dass der Benutzer das erste und oder zweite Merkmal in das Vergabemittel eingibt. Bei dem Vergabemittel kann es sich aber auch um ein Betätigungselement handeln, welches an der Vorrichtung angeordnet ist. Mittels des Vergabemittels können das erste und zweite Merkmal schnell und überschaubar den Dateneinheiten und/oder Datenelementen zugewiesen werden. Dadurch ergibt sich der technische Vorteil, dass eine schnelle Änderung und/oder Zuweisung des ersten und/oder zweiten Merkmales möglich ist.

Darüber hinaus hat es sich als vorteilhaft erwiesen, wenn die Vorrichtung ein Überprüfungsmittel aufweist. Das Überprüfungsmittel dient zum Empfang einer Vorgangsinformation von der Speichereinheit, wobei die Vorgangsinformation eine Information über eine laufende und/oder abgeschlossene Speicherung aufweist. Das Überprüfungsmittel kann ein Hardwareelement sein, welches in der Vorrichtung angeordnet ist und mit dem Übergabemittel zusammenwirkt. Der externen Speichereinheit kann zu Beginn der Speicherung übermittelt werden, welches Volumen an Daten im Rahmen der Speicherung gesichert werden soll. Zusätzlich können im Rahmen dieser Übermittlung auch Merkmalsinformationen und/oder geplante Übermittlungsdauern und/oder Sendedauern übermittelt werden. Die Speichereinheit kann anhand dieser vorab empfangenen Größen bestimmen, welcher Anteil der zu speichernden Daten schon übermittelt wurde. Entsprechende Zwischenstände können im Rahmen der Vorabinformation an das Überprüfungsmittel zurückgesandt werden. Damit ist für das Überprüfungsmittel gleichzeitig die Möglichkeit gegeben, zu bestimmen, ob die zu speichernden Daten auch in der gewünschten Vollständigkeit auf der externen Speichereinheit angekommen sind oder ob zwischenzeitlich Übermittlungsfehler aufgetreten sind. Dadurch ist sichergestellt, dass nicht eine unvollständige Versendung der zu sichernden Daten stattgefunden hat, sondern dass diese vollständig auf der externen Speichereinheit hinterlegt wurden.

Eine weitere vorteilhafte Ausgestaltung der Vorrichtung zeichnet sich dadurch aus, dass diese ein Uhrmittel aufweist, um eine Übertragungsdauer der Sendung der Daten an die Speichereinheit zu messen. Um dieses zu ermöglichen, kann das Uhrmittel beispielsweise einen Schwingquartz aufweisen, der Zeiten bestimmt. Vorteilhafterweise wird von dem Übertragungsmittel der Beginn des Sendens der ausgewählten Daten an die externe Speichereinheit übermittelt. Von da an kann das Uhrmittel den Beginn der Übertragungsdauer bestimmen. Einen entsprechenden Hinweis des Übertragungsmittels und/oder des Überprüfungsmittels kann dann das Ende der Übertragung und somit das Beenden der Messung der Übertragungsdauer durch das Uhrmittel festsetzen. Als vorteilhaft hat es sich herausgestellt, wenn das Uhrmittel insbesondere die Zeitdifferenz zwischen der Sendedauer und der Übertragungsdauer und/oder zwischen der Übermittlungsdauer und der Übertragungsdauer bestimmt. Durch Messung der genannten Zeitdifferenzen kann die Vorrichtung bestimmen, ob sich die vor der Übersendung bestimmte Datenrate im Rahmen der Übermittlung der Daten geändert hat. Diese Information kann in der Vorrichtung hinterlegt werden und zur Optimierung der Berechnung für weitere Speichervorgänge genutzt werden. Genauso vorteilhaft hat es sich herausgestellt, wenn das Uhrmittel die Zeitdifferenz zwischen der Maximaldauer und der Übertragungsdauer bestimmt. Dieses ermöglicht es der Vorrichtung ggf. weitere Datenelemente und/oder Dateneinheiten noch innerhalb der Maximaldauer zu übermitteln. Dadurch ergibt sich der technische Vorteil, dass Übertragungsressourcen nicht ungenutzt verbleiben.

In einer weiteren vorteilhaften Ausführungsform weist die Vorrichtung ein Typmittel auf, um einen Typ eines für die Sendung der Daten an die Speichereinheit verwendeten Netzes zu ermitteln. Das Typmittel dient dazu festzustellen, mittels welcher Übertragungssysteme die ausgewählten Daten von der Vorrichtung an die externe Speichereinheit übertragen werden. Da die erfindungsgemäß beschriebene Vorrichtung vorrangig in mobilen Endgeräten Verwendung finden soll, hat das Typmittel die Aufgabe festzustellen, ob es sich bei dem verwendeten Netz um ein Festnetz oder ein Mobilfunknetz handelt. Dazu kann das Typmittel auf die Schnittstellen der Vorrichtung und/oder des mobilen Endgerätes zugreifen, um festzustellen, über welche der Schnittstellen - kabel- oder funkbasierte - die Daten übermittelt werden sollen. Je nach verwendetem Netztyp kann die Wahrscheinlichkeit für eine Unterbrechung der Übertragung unterschiedlich ausfallen.

Eine weitere vorteilhafte Ausgestaltung zeichnet sich dadurch aus, dass die Vorrichtung ein Bewertungsmittel aufweist, um eine Übersendung der Daten an die Speichereinheit in Abhängigkeit von einem Attribut zu unterbinden. Bei dem Bewertungsmittel kann es sich um eine integrierte Schaltung oder ein Softwareelement handeln, welches auf der Vorrichtung aufgebracht ist bzw. auf dieser abläuft. Aufgabe des Bewertungsmittels ist es, die Übersendung der ausgewählten Daten an die Speichereinheit in Abhängigkeit von einem im Vorhinein festgelegten Attribut zu unterbrechen. Im Gegensatz zum Überprüfungsmittel, welches Informationen von der Speichereinheit erhält, wertet das Bewertungsmittel ausschließlich jene Informationen aus, die es von den einzelnen Mitteln der Vorrichtung erhält. Bei den Attributen kann es sich um wenigstens eines der Folgenden handeln: des Typs des Netzes, der Sendedauer, der Übermittlungsdauer, einer initialen Sicherung oder der Maximaldauer. So ist zum Beispiel denkbar, dass das Bewertungsmittel das Übersenden der Daten unterbricht, wenn es feststellt, dass es sich bei dem Netz um ein Mobilfunknetz handelt. In diesem Fall können entsprechende Ressourcen gespart werden und die Übermittlung der Daten von vornherein nicht ausgeführt werden. Das Gleiche gilt bei einer Überwachung der Sende- und/oder Übermittlungsdauer. Überschreitet die effektive Zeit, welche benötigt wird, um die Daten auf die externe Speichereinheit zu übertragen die Maximaldauer, so kann die Übersendung der Daten unterbrochen werden. Gleichfalls können die Sende- und/oder Übermittlungsdauer derartig groß sein, dass sie die Maximaldauer in jedem Fall deutlich überschreiten. In diesem Falle kann es zu einer Unterbindung der Übermittlung der Daten von vornherein kommen. Gleichfalls ist denkbar, dass schon eine vollständige Sicherung der Daten vorliegt und keine Änderung der Daten aufgetreten ist. In diesem Falle bedarf es keiner weiteren Sicherung, da dieses nur zu einer unnützen Belastung der Netze führen würde. Folglich kann auch hier das Bewertungsmittel die Übersendung der Daten unterbinden.

Die oben genannte Aufgabe wird ebenfalls durch ein Verfahren zur Auswahl von Daten für eine Speicherung gelöst, wobei die Daten
- in wenigstens einem Datenelement angeordnet werden und
- das wenigstens eine Datenelement in wenigstens einer Dateneinheit angeordnet wird,
wobei das Verfahren die folgenden Schritte umfasst:
- Bestimmen einer Datenrate, mit welcher die Daten an eine Speichereinheit sendbar sind,
- Berechnen einer Sendedauer aus der Datenrate und einer Gesamtmenge der Daten der wenigstens einen Dateneinheit,
- Ein erstes Auswählen wenigstens einer ausgewählten Dateneinheit anhand eines ersten Merkmales, wenn die Sendedauer größer als eine Maximaldauer ist,
- Ermitteln einer Übermittlungsdauer aus der Datenrate und einer Datenmenge der Daten der wenigstens einen ausgewählten Dateneinheit,
- Ein zweites Auswählen wenigstens eines Datenelementes aus der wenigstens einen ausgewählten Dateneinheit anhand eines zweiten Merkmales, wenn die Übermittlungsdauer größer als die Maximaldauer ist,
- Senden
   ■ der wenigstens einen Dateneinheit bei einer Sendedauer kleiner als der Maximaldauer an die Speichereinheit,
   ■ der wenigstens einen ausgewählten Dateneinheit bei einer Sendedauer größer als der Maximaldauer und einer Übermittlungsdauer kleiner als der Maximaldauer an die Speichereinheit, oder
   ■ des wenigstens einen ausgewählten Datenelementes an die Speichereinheit.

Vorteilhafterweise lässt sich das erfindungsgemäße Verfahren in all seinen Ausführungsvarianten auf der erfindungsgemäßen Vorrichtung ausführen. Dabei gelten Merkmale und Details, welche im Zusammenhang mit der Vorrichtung erwähnt wurden selbstverständlich auch für das Verfahren und umgekehrt.

Ein weiterer vorteilhafter Verfahrensschritt zeichnet sich dadurch aus, dass gespeichert wird, welche Daten und/oder welches ausgewählte Datenelement und/oder welche ausgewählte Dateneinheit an die Speichereinheit gesendet wird. Folglich wird im Rahmen des erfindungsgemäßen Verfahrens in einer entsprechenden Speichereinheit hinterlegt, welche der zum Speichern vorgesehenen Daten und/oder welche Elemente dieser Daten an die Speichereinheit gesendet wurden. Somit ergibt sich im Rahmen des erfindungsgemäßen Verfahrens permanent eine Übersicht darüber, welche der Teile der Daten schon an die Speichereinheit übermittelt wurden und welche noch nicht. Dieses hat den Vorteil, dass kein doppeltes Senden von schon übermittelten Daten auftritt. Dadurch tritt kein unnützer Verbrauch von technischen Ressourcen wie Netzwerkkapazitäten auf. Als besonders vorteilhaft hat es sich herausgestellt, wenn das Senden der Daten eine Auswahl des ersten und/oder des zweiten Merkmales beeinflusst. So kann beispielsweise das erfindungsgemäße Verfahren ausgeführt werden, wonach sichergestellt ist, dass die ausgewählten Dateneinheiten und/oder Datenelemente gespeichert wurden. Im Anschluss an diese Übermittlung der Daten wird das erste Merkmal und/oder das zweite Merkmal beeinflusst. Steht einem Nutzer wieder die Möglichkeit für eine Speicherung zu, kann es geboten sein, die schon gespeicherten Daten nicht ein weiteres Mal zu speichern. Vielmehr können dann andere, mit dem neuen ersten und/oder neuen zweiten Merkmal ausgezeichnete Daten im Rahmen des erfindungsgemäßen Verfahrens an die Speichereinheit übermittelt werden. Somit ist eine dynamische Anpassung des ersten und/oder zweiten Merkmales an die schon durchgeführten Speicherungen möglich.

Ein weiterer vorteilhafter Verfahrensschritt zeichnet sich dadurch aus, dass wenigstens ein Attribut der Speichereinheit ausgewertet wird, um das Senden der Daten auszulösen. Dieses Attribut wird von der Speichereinheit an jene Vorrichtung übersandt, welche die Daten aussendet, die gespeichert werden sollen. Bei dem Attribut kann es sich beispielsweise schon um die auf der Speichereinheit gespeicherten Daten und/oder Dateneinheiten und/oder Datenelemente handeln. Durch diese uni- und/oder bidirektionale Kommunikation zwischen der Vorrichtung und der Speichereinheit wird sichergestellt, dass sowohl die Daten versendende Vorrichtung als auch die Daten empfangende Speichereinheit jederzeit über den Ablauf des erfindungsgemäßen Verfahrens informiert sind. Dadurch besteht nicht die Gefahr, dass gesendete Daten nicht in der Speichereinheit ankommen und/oder dass Fehler innerhalb der Speichereinheit unberücksichtigt bleiben. Vielmehr kann ein nochmaliges Senden der zu speichernden Daten erfolgen.

In einem weiteren vorteilhaften Verfahrensschritt ist vorgesehen, dass bei einer Unterbrechung des Sendens der Daten an die Speichereinheit wenigstens eine der folgenden Informationen gespeichert wird:
- eine Menge der übermittelten Daten,
- eine Menge der nicht übermittelten Daten.

Durch Speichern dieser Informationen auf Seiten der die Daten aussendenden Vorrichtung, können insbesondere die noch nicht übermittelten Daten in einem späteren Versuch noch einmal übermittelt werden. Dadurch ist sichergestellt, dass kein mehrfaches Versenden derselben Daten und/oder ausgewählte Dateneinheiten und/oder ausgewählte Datenelemente auftritt. Um diesen Verfahrensschritt sicherzustellen, kann der Schritt "Senden" ergänzt werden durch einen Schritt "Überwachen", in dem die Übermittlung der ausgewählten Dateneinheiten, ausgewählten Datenelemente und/oder Daten an die Speichereinheit von einem entsprechenden Überwachungsmittel kontrolliert wird.

Alternativ oder zusätzlich hat es sich als vorteilhaft erwiesen, wenn bei einer Unterbrechung des Sendens der Daten das erste Merkmal und/oder das zweite Merkmal verändert werden. Ausgangspunkt für diesen Verfahrensschritt ist die Anpassung der Merkmale an die schon übersandten Teile der Daten. Ist geplant im Rahmen einer Speicherung beispielsweise zwei ausgewählte Datenelemente zu übermitteln und bricht nach dem Senden des ersten Datenelementes die Verbindung mit der Speichereinheit ab, so kann das erfindungsgemäße Verfahren erneut gestartet werden. Allerdings würde bei unverändertem ersten und/oder zweiten Merkmal die beiden vormals ausgewählten Datenelemente wieder als jene bestimmt werden, die gespeichert werden müssen. Dadurch würde das erste schon gespeicherte Datenelement ein weiteres Mal der Speicherung zugeführt. Dieses würde zu unnützem Verbrauch von Netzwerkkapazitäten führen. Folglich hat es sich als vorteilhaft erwiesen, wenn das erste und/oder zweite Merkmal den schon übermittelten Daten angepasst wird. Somit könnten das erste und/oder zweite Merkmal derart geändert werden, dass nur noch das zweite, bisher nicht gespeicherte Datenelement, ausgewählt wird und im Rahmen der Sendung an die Speichereinheit übermittelt wird. Weiterhin kann bei der Unterbrechung des Sendens der Daten ein erstes Auswahlkriterium für das erste Merkmal und/oder ein zweites Auswahlkriterium für das zweite Merkmal verändert werden. Die Auswahlkriterien haben Einfluss auf die Wahl des ersten und/oder zweiten Merkmales. Bei den Auswahlkriterien kann es sich insbesondere um Größen, wie die zur Verfügung stehende Datenrate und/oder den Typ des Netzes handeln. Findet beispielsweise eine Unterbrechung des Sendens dadurch statt, dass das Netz nicht entsprechend stabil ist, im Nachhinein aber ein anderes beständigeres Netz zur Verfügung steht, können die Auswahlkriterien entsprechend angepasst werden. Dadurch würden das erste und/oder zweite Merkmal derart verändert, dass nicht mehr die vorher ausgewählten Teile der Daten übermittelt werden, sondern eine wesentlich umfangreichere und/oder geänderte Auswahl der Daten im Rahmen der Speicherung übermittelt werden. Dieses kann insbesondere dann geschehen, wenn ein Festnetz zur Verfügung steht.

Die Erfindung umfasst ebenfalls ein Computerprogrammprodukt zum Ausführen des Verfahrens nach einem oder mehreren der oben beschriebenen Ansprüche, wobei die Verfahrensschritte in einem dem Computerprogrammprodukt gespeicherten Programm integriert sind, wenn das Verfahren auf einer Datenverarbeitungseinheit ausgeführt wird.

Als besonders vorteilhaft hat es sich auch herausgestellt, wenn die erfindungsgemäße Vorrichtung nach einem der hier beschriebenen Verfahren betrieben wird.

Weitere, die Erfindung verbessernde Maßnahmen sind in den Unteransprüchen angegeben oder ergeben sich aus der nachfolgenden Beschreibung der Ausführungsbeispiele der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumlicher Anordnungen und Verfahrensschritte, können sowohl für sich als auch in den verschiedensten Kombinationen erfindungswesentlich sein. Es zeigen:
- Figur 1: eine schematische Darstellung der zu speichernden Daten,
- Figur 2: eine schematische Darstellung der erfindungsgemäßen Vorrichtung,
- Figur 3: ein Flussdiagramm zur Verdeutlichung des erfindungsgemäßen Verfahrens und
- Figur 4: ein weiteres Flussdiagramm zur Verdeutlichung des erfindungsgemäßen Verfahrens.

Auf modernen mobilen Endgeräten, wie z. B. Notebooks, PDAs oder Mobiltelefonen, werden häufig Daten gelagert, die für einen Benutzer von großer Bedeutung sind. Durch einen Defekt oder Fehler können diese Daten allerdings unwiederbringlich verloren gehen. Um diesem vorzubeugen, hat es sich als vorteilhaft erwiesen, die Daten auf einer externen Speichereinheit zu hinterlegen. Dabei besteht allerdings der Nachteil, dass häufig eine zeitliche Begrenzung für die Vornahme der Übermittlung der zu sichernden Daten besteht. Insbesondere bei mobilen Endgeräten, die nicht permanent an ein Datennetz angeschlossen sind, wird die Sicherung der Daten häufig durch eine Maximaldauer sowie eine zur Verfügung stehende Datenrate begrenzt. Die erfindungsgemäße Vorrichtung sowie das erfindungsgemäße Verfahren, setzen einen Verwender eines mobilen Endgerätes in die Lage, Daten in Abhängigkeit von der zur Verfügung stehenden Datenrate selektiv zu sichern und so ein ausgewogenes Verhältnis zwischen dem Zeitbedarf und der Sicherung von Daten zu erreichen.

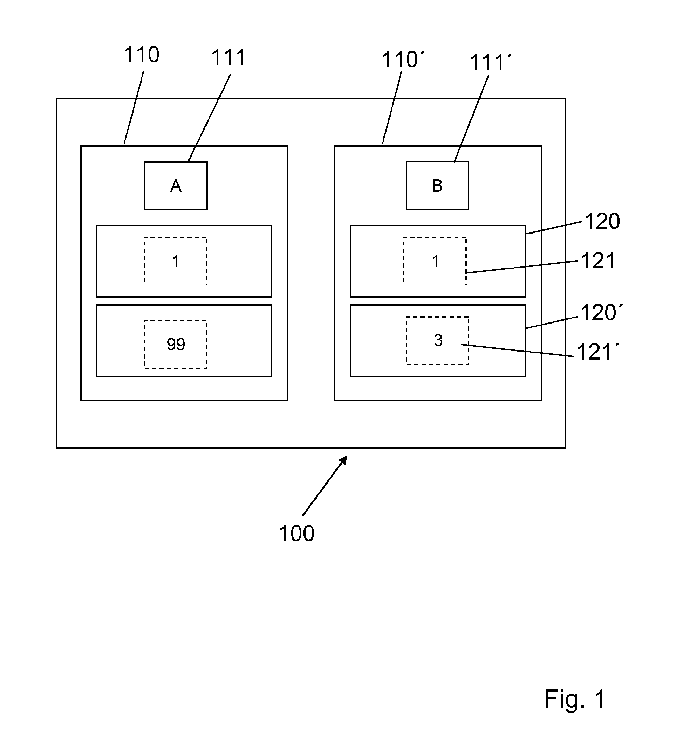

In Figur 1 sind Daten 100 schematisch dargestellt. Die Daten 100 können dabei beispielsweise auf der Festplatte eines Notebooks hinterlegt sein. Möchte der Nutzer des Notebooks die Daten 100 auf einer externen Speichereinheit sichern, könnte er dazu sämtliche Daten 100 über ein drahtloses Netzwerk an die Speichereinheit übertragen. Aus der Gesamtmenge der Daten 100 sowie einer mit dem drahtlosen Kommunikationsnetzwerk erreichbaren Datenübertragungsrate - auch Datenrate - lässt sich eine Übermittlungsdauer bestimmen, die für die Sicherung aller Daten 100 auf der externen Speichereinheit 50 benötigt werden. Im Rahmen der Erfindung sind die Daten weiter unterteilt. Die vorgenommene Unterteilung geschieht dabei aufgrund von Präferenzen des Nutzers des erfindungsgemäßen Verfahrens und/oder der erfindungsgemäßen Vorrichtung. Die Präferenzen werden nicht durch die Daten selber bestimmt. Wie der Figur 1 zu entnehmen ist, werden die Daten unterteilt in zwei Dateneinheiten 110, 110'. Diese beiden Dateneinheiten 110, 110' weisen jeweils ein erstes Merkmal 111, 111' auf. Darüber hinaus ist jede der beiden Dateneinheiten 110, 110' ein weiteres Mal unterteilt in Datenelemente 120, 120'. Jedes der eingezeichneten Datenelemente 120, 120' weist ein zweites Merkmal 121, 121' auf. Die doppelte Schachtelung der Daten in Dateneinheiten 110, 110' und Datenelementen 120, 120' sowie die Zuordnung eines ersten 111, 111' und/oder zweiten Merkmales 121, 121' ist für die Speicherung erfindungswesentlich.

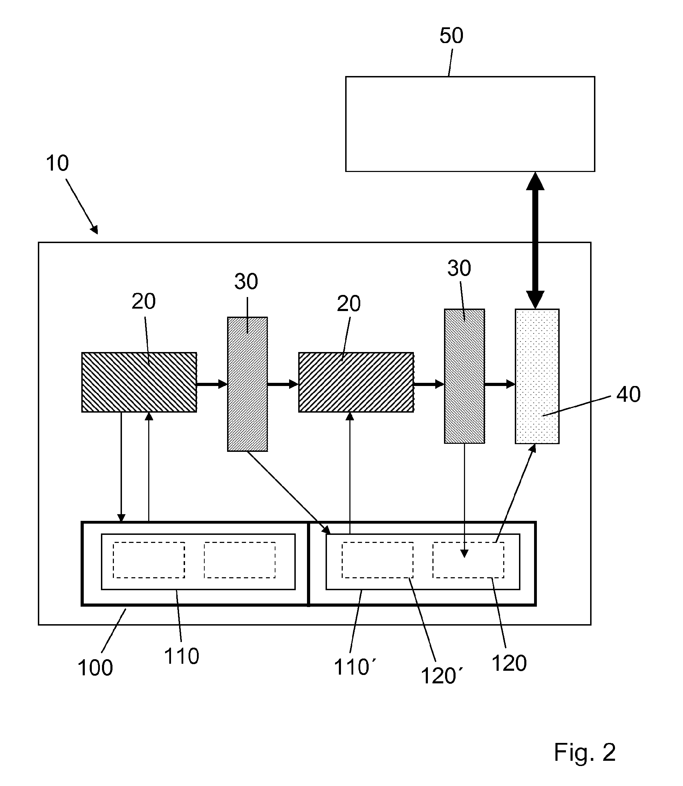

In Figur 2 ist die erfindungsgemäße Vorrichtung 10 zur Auswahl von Daten 100 für die Speicherung auf einer externen Speichereinheit 50 schematisch dargestellt. Bei der Vorrichtung 10 kann es sich insbesondere um eine mit Mikroprozessoren versehene Platine handeln, welche in das mobile Endgerät integriert ist. Die Vorrichtung 10 weist ein Zeitmittel 20 auf. Dieses Zeitmittel 20 dient vorrangig dazu, jenen Zeitbedarf zu brechen, der für die Übermittlung der Daten 100 oder ausgewählter Teile der Daten 100 an die externe Speichereinheit 50 benötigt wird. Die Vorrichtung 10 kann von einem Kommunikationsmittel, insbesondere einer Sende- und Empfangseinheit des mobilen Endgerätes jene Datenrate übermittelt bekommen, mit welcher die Daten 100 an die externe Speichereinheit 50 übermittelt werden können. Aus dieser Datenrate und einer Gesamtmenge der Daten 100 bestimmt das Zeitmittel 20 eine Sendedauer. Die Dauer entspricht jener Zeit, die voraussichtlich für die Übermittlung aller Daten 100 an die externe Speichereinheit 50 benötigt würde. Diese Information bezüglich der Sendedauer kann von dem Zeitmittel an ein Auswahlmittel 30 übersandt werden. Bei dem Auswahlmittel 30 handelt es sich vorzugsweise um einen integrierten Schaltkreis, der entsprechend programmiert ist. Das Auswahlmittel 30 bestimmt, ob die vom Zeitmittel 20 berechnete Sendedauer größer ist als eine Maximaldauer. Die Maximaldauer ist jener Zeitrahmen, der im Vorhinein festgelegt wurde und die maximale Zeit beinhaltet, die für die Speicherung der Daten 100 auf der externen Speichereinheit 50 vorgesehen ist. Die Maximaldauer kann im Vorhinein festgelegt werden oder von einem Benutzer der Vorrichtung 10 übermittelt werden, sobald eine Speicherung der Daten 100 vorgesehen ist. Ermittelt das Auswahlmittel 30, dass die vom Zeitmittel 20 berechnete Sendedauer größer ist als die Maximaldauer, kann die Gesamtmenge der Daten 100 nicht innerhalb der vorgegebenen Zeit an die externe Speichereinheit 50 übermittelt werden. Erfindungsgemäß ist vorgesehen, dass in diesem Fall das Auswahlmittel 30 wenigstens eine ausgewählte Dateneinheit 110, 110' anhand eines ersten Merkmales 111, 111' auswählt.

Wie die Figur 1 verdeutlicht ist jeder der Dateneinheiten 110, 110' ein erstes Merkmal 111, 111' zugeordnet. In Figur 1 ist dieses erste Merkmal 111, 111' gekennzeichnet durch den Großbuchstaben "A" oder "B". Dieses erste Merkmal 111, 111' wird von dem Benutzer der Dateneinheit 110, 110' zugewiesen. Im Rahmen des Ausführungsbeispieles soll das erste Merkmal 111 "B" eine höhere Priorität aufweisen, als das erste Merkmal 111 "A". Folglich wird dieses erste Merkmal 111' von dem Auswahlmittel 30 ausgewählt. Durch diese Auswahl der ausgewählten Dateneinheit 110' wird nur ein Teil der Gesamtmenge der Daten 100 für die Speicherung vorgesehen. Diese Information über die ausgewählte Dateneinheit 110' wird dem Zeitmittel 20 zugeführt. Das Zeitmittel 20 bestimmt eine Übermittlungsdauer aus der Datenrate und einer Datenmenge der wenigstens einen ausgewählten Dateneinheit 110'. Sollte dabei festgestellt werden, dass die Übermittlungsdauer kleiner als die Maximaldauer ist, wird die wenigstens eine ausgewählte Dateneinheit 110' an die Speichereinheit 50 gesandt. Im anderen Fall, wenn die Übermittlungsdauer größer als die Maximaldauer ist, wird in einem zweiten Schritt eine weitere Reduktion der zu sichernden Daten 100 vorgenommen. Im Rahmen dieses zweiten Reduktionsschrittes wird anhand eines zweiten Merkmales 121, 121' eines der Datenelemente 120, 120' aus der Dateneinheit 110' ausgewählt. In Figur 1 ist das zweite Merkmal 121, 121' mit den Zahlen "1" und "3" gekennzeichnet. Für das hier beschriebene Ausführungsbeispiel soll angenommen werden, dass das zweite Merkmal 121 "1" eine höhere Priorität aufweist als das zweite Merkmal 121' "3". Folglich wird aus der ausgewählten Dateneinheit 110' mittels des zweiten Merkmales 121 ein Datenelement 120 ausgewählt. Dieses ausgewählte Datenelement 120 wird dann mittels des Übergabemittels 40 an die Speichereinheit 50 gesandt. Die beschriebene Vorrichtung 10 vollführt im Rahmen einer zweistufigen Auswahl somit eine Reduktion jener Teile der Gesamtmenge der Daten 100, die im Rahmen der Maximaldauer über die Kommunikationsschnittstelle der mobilen Einheit an die externe Speichereinheit 50 übermittelt werden können.

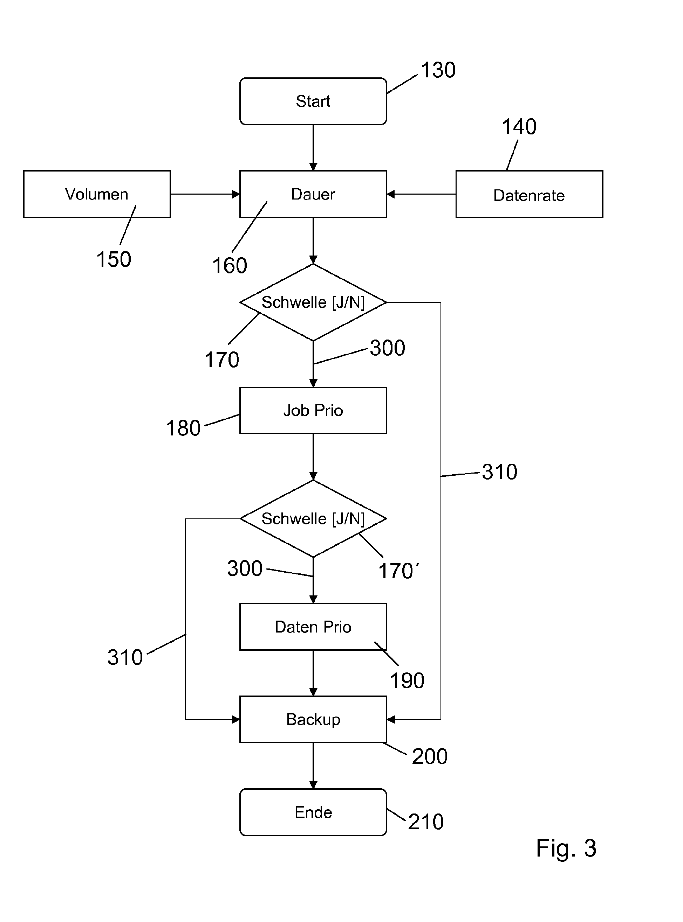

In der Figur 3 ist ein Flussdiagramm dargestellt, welches zur Verdeutlichung des erfindungsgemäßen Verfahrens dienen soll. Ausgelöst wird das Verfahren durch einen Startvorgang 130. Dieser Startvorgang 130 des erfindungsgemäßen Verfahrens kann entweder durch einen Benutzer oder in zeitgleichen Abständen automatisch von der mobilen Einheit ausgelöst werden. Denkbar ist es auch, dass die erfindungsgemäße Vorrichtung 10 zu jedem Zeitpunkt in dem diese Kontakt mit der externen Speichereinheit hat, von sich aus überprüft, ob ein Speichervorgang durchgeführt werden soll. Dadurch könnte eine permanente Speicherung der für einen Benutzer bedeutenden Daten 100 sichergestellt werden, ohne dass dieser aktiv eingreifen müsste. Im Rahmen des erfindungsgemäßen Verfahrens findet nach dem Start 130 eine Bestimmung 140 einer Datenrate statt, mit welcher die Daten 100 an die Speichereinheit 50 sendbar sind. Darüber hinaus wird für die Berechnung einer Sendedauer das Volumen 150 der zu sichernden Daten 100 und/oder Datenelemente 120, 120' und/oder Dateneinheiten 110, 110' benötigt. Aus der Datenrate und einer Gesamtmenge der Daten 100 kann eine Sendedauer berechnet 160 werden. Im Rahmen eines Vergleiches 170 wird dann geprüft, ob die Maximaldauer durch die berechnete Sendedauer überschritten wird. Wird die durch die Maximaldauer vorgegebene Schwelle unterschritten 310 erfolgt eine Übersendung der Daten 100 an die externe Speichereinheit 50.

Wird von der ermittelten Sendedauer die durch die Maximaldauer gesetzte Schwelle überschritten 310, wird im Rahmen einer ersten Auswahl 180 wenigstens eine Dateneinheit 110, 110' ausgewählt. Unter Berücksichtigung der Datenmenge, der wenigstens einen ausgewählten Dateneinheit 110, 110' und der für die Übermittlung bestimmten Datenrate wird eine Übermittlungsdauer errechnet. Unterschreitet 170' die Übermittlungsdauer die Maximaldauer, wird die wenigstens eine ausgewählte Dateneinheit 110, 110' an die Speichereinheit 50 gesandt 310. Im Rahmen dieses Backups 200 werden folglich die ausgewählten Dateneinheiten 110, 110' über eine Kommunikationsschnittstelle des mobilen Endgerätes an die externe Speichereinheit 50 übermittelt.

Sollte im Rahmen der Überprüfung eines Unter- oder Überschreitens der Schwelle 170' ermittelt werden, dass die Übermittlungsdauer größer als die Sendedauer ist, findet erfindungsgemäß eine zweite Auswahl 190 statt. Im Rahmen dieser zweiten Auswahl 190 wird aus der wenigstens einen ausgewählten Dateneinheit 110, 110' anhand eines zweiten Merkmales 121 wenigstens ein Datenelement 120, 120' ausgewählt. Erfindungsgemäß ist nun die kleinste mit Merkmalen versehene Einheit erreicht. Folglich wird im Rahmen eine Backups 200 das wenigstens eine ausgewählte Datenelement 120, 120' an die Speichereinheit 50 übermittelt. Anschließend wird das Verfahren beendet 210.

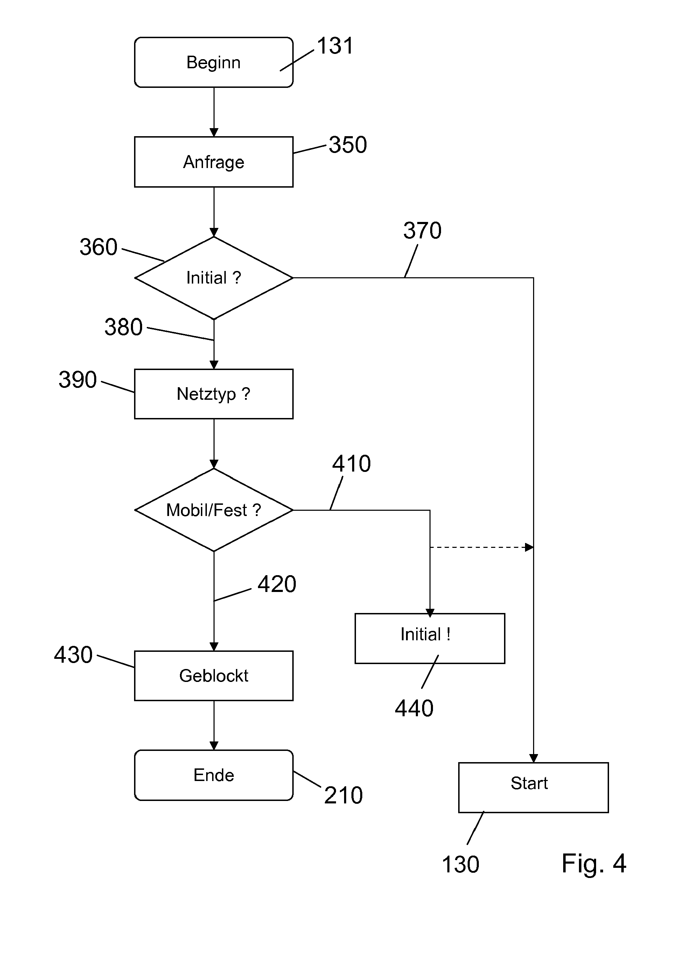

In Figur 4 sind weitere Verfahrensschritte des erfindungsgemäßen Verfahrens dargestellt. Die aufgeführten Verfahrensschritte sind zeitlich vor jenen angeordnet, die in Figur 3 dargestellt sind. Nach einem Beginn 131 des Sicherungsvorganges findet vorrangig eine Abfrage 350 statt, ob eine initiale Sicherung durchgeführt worden ist. Im Rahmen der Erfindung soll unter dem Begriff der initialen Sicherung verstanden werden, dass sämtliche Daten 100 unabhängig von den Datenelementen, Dateneinheiten und/oder Merkmalen schon auf dem externen Speicherelement hinterlegt wurden. Diese Anfrage 250 wird folglich entweder von der externen Speichereinheit 50 beantwortet oder mittels einer entsprechenden Information, die auf der mobilen Vorrichtung hinterlegt wurde. Fand eine solche initiale Sicherung 360 schon statt, bedarf es nur noch der Ausführung 370 des erfindungsgemäßen Verfahrens. Folglich wird ein Sicherungsprozess gestartet, der jenen entspricht, welcher in Figur 3 beschrieben wurde. Im Rahmen dieses Sicherungsprozesses werden dann in Abhängigkeit von der maximalen Dauer und der Datenrate die ausgewählten Datenelemente und/oder Dateneinheiten gespeichert. Hat andererseits eine initiale Sicherung 360 noch nicht stattgefunden 380 findet eine Abfrage statt, über welchen Typ des Netzes die Kommunikation mit der externen Speichereinheit 50 stattfindet. Diese Abfrage 390 kann beispielsweise dadurch bestehen, dass die Kommunikationsschnittstelle der mobilen Einheit einer entsprechenden Information der erfindungsgemäßen Vorrichtung zur Verfügung stellt. Da es sich vorrangig um ein mobiles Endgerät handelt, auf das das erfindungsgemäße Verfahren durchgeführt werden soll, kann es sich bei der Kommunikationsschnittstelle um eine mobile, drahtlose Schnittstelle oder eine Schnittstelle zu einem Festnetz handeln. Wird im Rahmen dieser Abfrage beispielsweise festgestellt, dass die Kommunikation mit der externen Speichereinheit 50 über eine Festnetzverbindung 410 stattfindet, kann die initiale Sicherung 440 gestartet werden, bei der sämtliche Daten 100 auf der externen Speichereinheit hinterlegt werden und/oder zusätzlich ein Starten des erfindungsgemäßen Verfahrens stattfinden. Ergibt die Abfrage 390 allerdings, dass es sich um ein Mobilfunknetz handelt, wird die initiale Sicherung 440 geblockt 430 und der Vorgang beendet 210. Je nach Ausgestaltung kann der in Figur 4 beschriebene Vorgang allerdings zu einem späteren Zeitpunkt wieder gestartet werden.

### Bezugszeichenliste

- 10: Vorrichtung

- 20: Zeitmittel
- 30: Auswahlmittel
- 40: Übergabemittel
- 50: Speichereinheit

- 100: Daten

- 110,110': Dateneinheit
- 111, 111': erstes Merkmal

- 120,120': Datenelement
- 121, 121': zweites Merkmal

- 130: Start des Verfahrens
- 131: Beginn
- 140: Bestimmen einer Datenrate
- 150: Ermitteln einer Gesamtmenge der Daten
- 160: Berechnen einer Sendedauer
- 170,170': Über- oder unterschreiten der Schwelle
- 180: erstes Auswählen
- 190: zweites Auswählen
- 200: Senden an die Speichereinheit
- 210: Ende

- 300: Überschreiten Schwelle
- 310: Unterschreiten Schwelle

- 350: Anfrage an Speichereinheit
- 360: Initiale Sicherung
- 370: erste Sicherung
- 380: nicht erste Sicherung

- 390: Abfrage Netztyp
- 400: Antwort Netztyp
- 410: Festnetz
- 420: Mobilnetz
- 430: Blocken der Sicherung
- 440: initiale Sicherung

## Patentansprüche

1. Vorrichtung (10) zum Auswählen von Daten (100) für eine Speicherung,
wobei die Daten (100)
- in wenigstens einem Datenelement (120,120') angeordnet sind und
- das wenigstens eine Datenelement (120,120') in wenigstens einer Dateneinheit (110,110') angeordnet ist,
mit
- zumindest einem Zeitmittel (20)
○ zur Bestimmung einer Sendedauer aus einer Datenrate, mit welcher die Daten (100) an eine Speichereinheit (50) sendbar sind, und einer Gesamtmenge der Daten (100) der wenigstens einen Dateneinheit (110,110'), sowie
○ zur Bestimmung einer Übermittlungsdauer aus der Datenrate und einer Datenmenge der Daten (100) wenigstens einer ausgewählten Dateneinheit (110,110'),
- zumindest einem Auswahlmittel (30),
○ das bei einer Sendedauer größer als einer Maximaldauer, wenigstens eine ausgewählte Dateneinheit (110,110') anhand eines ersten Merkmales (111,111') auswählt, sowie
○ das bei einer Übermittlungsdauer größer als der Maximaldauer, aus der wenigstens einen ausgewählten Dateneinheit (110,110') anhand eines zweiten Merkmales (121,121') wenigstens ein Datenelement (120,120') auswählt, und
- zumindest einem Übergabemittel (40), das
○ bei einer Sendedauer kleiner als der Maximaldauer, die wenigstens eine Dateneinheit (110,110') an die Speichereinheit (50) sendet,
○ bei einer Sendedauer größer als der Maximaldauer und einer Übermittlungsdauer kleiner als der Maximaldauer, die wenigstens eine ausgewählte Dateneinheit (110,110') an die Speichereinheit (50) sendet, oder
○ das wenigstens eine ausgewählte Datenelement (120,120') an die Speichereinheit (50) sendet.

2. Vorrichtung (10) nach Anspruch 1,
**dadurch gekennzeichnet,**
**dass** die Vorrichtung (10) ein Vergabemittel aufweist, um der Dateneinheit (110,110') das erste Merkmal (111,111') und/oder dem Datenelement (120,120') das zweite Merkmal (121,121') zuzuweisen und/oder die Maximaldauer aufzunehmen.

3. Vorrichtung (10) nach einem der Ansprüche 1 oder 2,
**dadurch gekennzeichnet,**
**dass** die Vorrichtung (10) ein Überprüfungsmittel aufweist, zum Empfang einer Vorgangsinformation von der Speichereinheit (50), wobei die Vorgangsinformation eine Information über eine laufende und/oder abgeschlossene Speicherung aufweist.

4. Vorrichtung (10) nach einem der vorherigen Ansprüche,
**dadurch gekennzeichnet,**
**dass** die Vorrichtung (10) ein Uhrmittel aufweist, um eine Übertragungsdauer der Sendung der Daten (100) an die Speichereinheit (50) zu messen, insbesondere um die Zeitdifferenz zwischen der Sendedauer und der Übertragungsdauer und/oder zwischen der Übermittlungsdauer und der Übertragungsdauer und/oder zwischen der Maximaldauer und der Übertragungsdauer zu bestimmen.

5. Vorrichtung (10) nach einem der vorherigen Ansprüche,
**dadurch gekennzeichnet,**
**dass** die Vorrichtung (10) ein Typmittel aufweist, um einen Typ eines für die Sendung der Daten (100) an die Speichereinheit (50) verwendeten Netzes zu ermitteln, wobei insbesondere das Netz wenigstens eines der folgenden ist: ein Festnetz oder ein Mobilfunknetz.

6. Vorrichtung (10) nach einem der vorherigen Ansprüche,
**dadurch gekennzeichnet,**
**dass** die Vorrichtung (10) ein Bewertungsmittel aufweist, um eine Übersendung der Daten (100) an die Speichereinheit (50) in Abhängigkeit von einem Attribut zu unterbinden, insbesondere dass das Attribut wenigstens eines der folgenden ist: der Typ des Netzes, die Sendedauer, die Übermittlungsdauer, eine initiale Sicherung oder die Maximaldauer.

7. Verfahren zur Auswahl von Daten (100) für eine Speicherung, wobei
die Daten (100)
- in wenigstens einem Datenelement (120,120') angeordnet werden und
- das wenigstens eine Datenelement (120,120') in wenigstens einer Dateneinheit (110,110') angeordnet wird,
wobei das Verfahren die folgenden Schritte umfasst:
- Bestimmen (140) einer Datenrate, mit welcher die Daten (100) an eine Speichereinheit (50) sendbar sind,
- Berechnen (160) einer Sendedauer aus der Datenrate und einer Gesamtmenge der Daten (100) der wenigstens einen Dateneinheit (110,110'),
- Ein erstes Auswählen (180) wenigstens einer ausgewählten Dateneinheit (110,110') anhand eines ersten Merkmales (111,111'), wenn die Sendedauer größer als eine Maximaldauer ist,
- Ermitteln einer Übermittlungsdauer aus der Datenrate und einer Datenmenge der Daten (100) der wenigstens einen ausgewählten Dateneinheit (110,110'),
- Ein zweites Auswählen (190) wenigstens eines Datenelementes (120,120') aus der wenigstens einen ausgewählten Dateneinheit (110,110') anhand eines zweiten Merkmales (121,121'), wenn die Übermittlungsdauer größer als die Maximaldauer ist,
- Senden (200)
■ der wenigstens einen Dateneinheit (110,110') bei einer Sendedauer kleiner als der Maximaldauer an die Speichereinheit (50),
■ der wenigstens einen ausgewählten Dateneinheit (110,110') bei einer Sendedauer größer als der Maximaldauer und einer Übermittlungsdauer kleiner als der Maximaldauer an die Speichereinheit (50), oder
■ des wenigstens einen ausgewählten Datenelementes (120,120') an die Speichereinheit (50).

8. Verfahren nach Anspruch 7,
**dadurch gekennzeichnet,**
**dass** gespeichert wird, welche Daten (100) und/oder welches ausgewählte Datenelement (120,120') und/oder welche ausgewählte Dateneinheit (110,110') an die Speichereinheit (50) gesendet werden, insbesondere dass das Senden (200) der Daten (100) eine Auswahl des ersten Merkmales (111,111') und/oder des zweiten Merkmals (121,121') beeinflusst.

9. Verfahren nach Anspruch 7 oder 8,
**dadurch gekennzeichnet,**
**dass** wenigstens ein Attribut der Speichereinheit (50) ausgewertet wird, um das Senden (200) der Daten (100) auszulösen, insbesondere dass das wenigstens eine Attribut der Speichereinheit (50) gespeichert wird.

10. Verfahren nach einem der vorherigen Ansprüche 7 bis 9,
**dadurch gekennzeichnet,**
**dass** bei einer Unterbrechung des Sendens (200) der Daten (100) an die Speichereinheit (50) wenigstens eine der folgenden Informationen gespeichert wird:
- eine Menge der übermittelten Daten (100),
- eine Menge der nicht übermittelten Daten (100).

11. Verfahren nach einem der vorherigen Ansprüche 7 bis 9,
**dadurch gekennzeichnet,**
**dass** bei einer Unterbrechung des Sendens (200) der Daten (100) das erste Merkmal (111,111') und/oder das zweite Merkmal (121,121') verändert wird, insbesondere bei der Unterbrechung des Sendens (200) der Daten (100) ein erstes Auswahlkriterium für das erste Merkmal (111,111') und/oder ein zweites Auswahlkriterium für das zweite Merkmal (121,121') verändert wird.

12. Computerprogramm-Produkt zur Ausführung des Verfahrens nach einem oder mehreren der vorhergehenden Ansprüche 7 bis 11,
**dadurch gekennzeichnet,**
**dass** die Verfahrensschritte in einem in dem Computerprogramm-Produkt gespeicherten Programm integriert sind, wenn das Verfahren auf einer Datenverarbeitungseinheit ausgeführt wird.

13. Vorrichtung (10) nach einem der vorherigen Ansprüche 1 bis 6,
**dadurch gekennzeichnet,**
**dass** die Vorrichtung (10) nach wenigstens einem der Verfahren gemäß einem der Ansprüche 7 bis 11 betreibbar ist.
